# EUROPEAN PATENT SPECIFICATION

(11) **EP 0 439 850 B1**
(45) Date of publication and mention of the grant of the patent: **23.08.1995**
(21) Application number: 90203089.9
(22) Date of filing: 21.11.1990
(51) Int. Cl.: B01D 43/00

(54) **Separation of particles adsorbed on carrier material**
Abtrennung von auf einem Träger adsorbierten Teilchen
Séparation de particles adsorbés sur un support

(30) Priority: 02.01.1990 NL 9000004
(43) Date of publication of application: 07.08.1991
(73) Proprietor: OOSTERHOF HOLMAN MILIEUTECHNIEK B.V., 9843 HA Grijpskerk (NL)
(72) Inventor: Boersma, Rintje, NL-6681 KA Bemmel (NL)
(74) Representative: Hoorweg, Petrus Nicolaas

(56) References cited:
- WO-A-90/09222
- IEEE TRANSACTIONS ON MAGNETICS, vol. MAG-11, no. 5, September 1975, pages 1570-1572; C. DE LATOUR et al.: "Magnetic separation in water pollution control -II"
- PATENT ABSTRACTS OF JAPAN, vol. 8, no. 283 (C-258), 25th December 1984;& JP-A-59 154 148 (NIPPON DENKI K.K.) 03-09-1984
- PATENT ABSTRACTS OF JAPAN, vol. 8, no. 93 (C-220), 27th April 1984;& JP-A-50 010 317 (DAIDO TOKOSHUKO) 19-01-1984

## Description

The present invention relates to a method for separating particles present in a liquid from flakes adhered to the particles by sheering forces, wherein the particles with the flakes adhered thereto are subjected to a velocity gradient in the fluid generating said sheering forces.

Such a method is known from the article "Magnetic separation in water polution control", IEEE Transactions on Magnetics, vol. 11, No. 5, September 1975.

According to a first method described in said document an ultrasonic field is applied on the fluid, and the separation of the particles and the flakes takes place only slowly, so that the process takes much time. Further the achieved separation is not complete; not-separated combinations of particles and flakes remain. According to a second method described in said document the fluid is pumped into a magnetic filtering device. This magnetic filtering device holds the magnetic particles while the non-magnetic flakes are washed away by the impact of the moving fluid.

This method requires a substantial amount of equipment for the magnetic filter.

The aim of the present invention is to provide a method for separating such particles, in which the separation process can take place in a short duration of time, in which a more complete separation is achieved, and for which only little equipment is needed.

This aim is reached in that said velocity gradient in the liquid is equal to or greater than the velocity gradient consistent with the size of said particles.

Subsequently, the present invention will be elucidated with the help of the accompanying drawings, in which:
fig. 1: is a diagram for explaining the theoretical basis of the present invention; and
fig. 2: is a schematic view of an embodiment of an apparatus for application of the method according to the present invention.

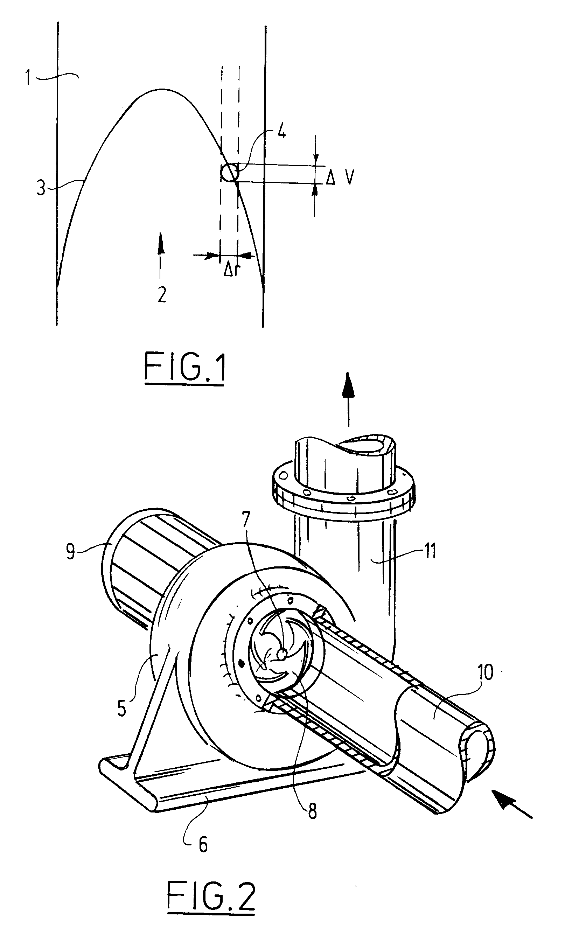

In fig. 1 a channel 1 has been shown, in which a laminary liquid current is present, depicted with an arrow 2. The line indicated with 3 shows the velocity profile of the liquid current 2.

As an example a particle 4 with size Δr has been drawn in the fluid current 2. The particle experiences a velocity gradient Δv in the position indicated. The partcle is subjected to a shearing force, which is proportional with$\text{G =} \frac{\text{dv}}{\text{dr}}$ . As a consequence of this force the particle will part into two elements.

More in particular it appears from the literature that, when a certain value of G is present, the size of the flakes is limited to a value, being dependent on said value of G as greater particles will be pulled into elements by the shearing forces.

By setting the value of G the maximal existable flake size can be controlled. The present invention uses this result by setting the value of G such, that the maximal existable flake size is equal to the size of the magnetite particles. The calcium phosphate- and calcium carbonate flakes adhered to the magnetite particles are being released from the magnetite particles.

This is, however, a process taking place in great numbers, so that the microscopic approach above is not valid as a physical law.

Thus, it is aimed for a method, in which a shearing force can be generated, so that the maximal existable particle size is equal to the particle size of the magnetite.

Applicant has made some tests with several apparatuses to determine which apparatus would lead to the highest possible rate of separation according to the principle set out above. It has appeared that surprisingly during the separation of particles of magnetite and the flakes of calcium phosphate and calcium carbonate adhered thereto, a centrifugal pump would lead to the best results.

Such a pump has been depicted in fig. 2. This pump comprises a housing 5, which has been located on a basis 6. In the house 5 a shaft 7 has been provided, on to which a van 8 has been provided. The shaft 8 is driven by an electromotor 9. Concentric with the shaft 8 a supply tube l0 has been provided, whereas in the well-known way a drain pipe 11 has been connected to the pump house 5.

By rotating the van such a turbulence develops in the border area of the pump house 5, that substantial velocity gradients develop. As a consequence thereof a good separation between the particles and the flakes is achieved. A suspension of calcium phosphate-magnetite particles is fed to the pump, and it appears that in the effluent the greater part of the particles has been separated into elements.

## Claims

1. Method for separating particles present in a liquid from flakes adhered to the particles by sheering forces, wherein the particles with the flakes adhered thereto are subjected to a velocity gradient in the fluid generating said sheering forces, **characterized** in that said velocity gradient in the liquid is equal to or greater than the velocity gradient consistent with the size of said particles.

2. Method according to claim 1, **characterized** in that said velocity gradient in the liquid is being generated by an apparatus causing a turbulence.

3. Method according to claim 2, **characterized** in that the apparatus causing a turbulence is a pump.

4. Method according to claim 3, **characterized** in that the pump is a centrifugal pump.

5. Method according to one of the preceeding claims, **characterized** in that the particles are magnetite particles, and that the flakes adhered thereto consist of calcium phosphate and calcium carbonate.

## Patentansprüche

1. Verfahren zum Trennen von in einer Flüssigkeit vorhandenen Teilchen von an den Teilchen haftenden Flocken durch Scherkräfte, bei welchem die Teilchen mit den daran haftenden Flocken einem Geschwindigkeitsgradienten in der die Scherkräfte erzeugenden Flüssigkeit ausgesetzt werden, dadurch gekennzeichnet, daß der Geschwindigkeitsgradient in der Flüssigkeit ebensogroß wie oder größer als der mit der Größe der Teilchen vereinbare Geschwindigkeitsgradient ist.

2. Verfahren nach Anspruch 1, dadurch gekennzeichnet, daß der Geschwindigkeitsgradient in der Flüssigkeit durch eine eine Turbulenz verursachende Vorrichtung erzeugt wird.

3. Verfahren nach Anspruch 2, dadurch gekennzeichnet, daß die eine Turbulenz verursachende Vorrichtung eine Pumpe ist.

4. Verfahren nach Anspruch 3, dadurch gekennzeichnet, daß die Pumpe eine Zentrifugalpumpe ist.

5. Verfahren nach einem der vorhergehenden Ansprüche, dadurch gekennzeichnet, daß die Teilchen Magnetit-Teilchen sind und daß die daran haftenden Flocken aus Kalziumphosphat und Kalziumkarbonat bestehen.

## Revendications

1. Procédé pour séparer par des forces de cisaillement, des particules présentes dans un liquide d'avec des paillettes adhérant aux particules, dans lequel les particules auxquelles adhèrent les paillettes sont soumises dans le fluide à un gradient de vitesse engendrant lesdites forces de cisaillement, caractérisé en ce que ledit gradient de vitesse dans le liquide est égal ou supérieur au gradient de vitesse admissible pour la taille desdites particules.

2. Procédé selon la revendication 1, caractérisé en ce que ledit gradient de vitesse dans le liquide est engendré par un appareil provoquant une turbulence.

3. Procédé selon la revendication 2, caractérisé en ce que l'appareil provoquant une turbulence est une pompe.

4. Procédé selon la revendication 3, caractérisé en ce que la pompe est une pompe centrifuge.

5. Procédé selon l'une quelconque des revendications précédentes, caractérisé en ce que les particules sont des particules de magnétite, et en ce que les paillettes adhérant à celles-ci consistent en phosphate de calcium et carbonate de calcium.
